(19) Europäisches Patentamt

European Patent Office

Office européen des brevets

(11) **EP 1 783 790 B1**

(12) **EUROPEAN PATENT SPECIFICATION**

(45) Date of publication and mention
of the grant of the patent:
**07.07.2010 Bulletin 2010/27**

(51) Int Cl.:
*H01G 4/12* (2006.01)    *H01G 4/30* (2006.01)

(21) Application number: **05775081.2**

(22) Date of filing: **23.08.2005**

(86) International application number:
**PCT/JP2005/015270**

(87) International publication number:
**WO 2006/022258 (02.03.2006 Gazette 2006/09)**

(54) **MULTILAYER CERAMIC CAPACITOR AND METHOD FOR CONTROLLING EQUIVALENT SERIES RESISTANCE**

MEHRSCHICHTKERAMIKKONDENSATOR UND VERFAHREN ZUR STEUERUNG DES ÄQUIVALENTEN VORWIDERSTANDES

CONDENSATEUR CÉRAMIQUE MULTICOUCHE ET PROCÉDÉ POUR CONTROLER LA RÉSISTANCE-SÉRIE ÉQUIVALENTE

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.08.2004   JP 2004248438
22.12.2004   JP 2004370533
01.06.2005   PCT/JP2005/010025**

(43) Date of publication of application:
**09.05.2007   Bulletin 2007/19**

(73) Proprietor: **MURATA MANUFACTURING CO., LTD.
Nagaokakyo-shi, Kyoto 617-8555 (JP)**

(72) Inventors:
• **KUSANO, Mitsuhiro
Nagaokakyo-shi, Kyoto 617 (JP)**

• **WATANABE, Shizuharu
Nagaokakyo-shi, Kyoto 617 (JP)**

(74) Representative: **Stöckeler, Ferdinand et al
Schoppe, Zimmermann, Stöckeler & Zinkler
Patentanwälte
Postfach 246
82043 Pullach bei München (DE)**

(56) References cited:
**EP-A- 0 777 242         WO-A-2004/053901
FR-A- 2 655 179         JP-A- 11 297 581
JP-A- 61 158 128        JP-A- 2000 223 348
JP-A- 2001 223 132      JP-A- 2004 047 536
JP-A- 2004 128 328**

**Description**

The present invention relates to a monolithic ceramic capacitor and a method for adjusting an equivalent series resistance thereof. In particular, it relates to a monolithic ceramic capacitor including external electrodes provided with a function as a resistance element and a method for adjusting an equivalent series resistance thereof.

Heretofore, capacitors have been used separately in such a way that a monolithic ceramic capacitor has been used for eliminating high-frequency voltage fluctuations of a smoothing circuit, whereas a tantalum capacitor or an aluminum electrolytic capacitor has been used for eliminating low-frequency voltage fluctuations.

As described above, the monolithic ceramic capacitor has been used merely for eliminating high-frequency voltage fluctuations because the equivalent series resistance (ESR) of the monolithic ceramic capacitor is smaller than those of the tantalum capacitor and the aluminum electrolytic capacitor and, therefore, the components constituting the equivalent circuit of the monolithic ceramic capacitor becomes substantially merely a C component and an L component, so that oscillation occurs easily in response to low-frequency voltage fluctuations and a noise is generated. Consequently, in order to eliminate low-frequency voltage fluctuations, a capacitor, which does not oscillate in response to low-frequency voltage fluctuations, having a large ESR, that is, the above-described tantalum capacitor or the aluminum electrolytic capacitor must be used.

However, the tantalum capacitor and the aluminum electrolytic capacitor are large as compared with the monolithic ceramic capacitor, and miniaturization of an electronic apparatus provided with such a capacitor is inhibited.

On the other hand, a method, in which a resistance element serving as a discrete component is connected to a monolithic ceramic capacitor in series and, thereby, a circuit is provided with a resistance component so as to suppress oscillation in response to low-frequency voltage fluctuations, is also used. However, in this case, a mounting area for connecting the resistance element serving as a discrete component is required. This also inhibits miniaturization of the electronic apparatus.

In order to solve the above-described problems, it has been proposed to provide a function as a resistance element to external electrodes included in a monolithic ceramic capacitor.

For example, Japanese Unexamined Patent Application Publication No. 4-337616 (Patent Document 1) describes that a metal oxide film is formed on an external electrode surface, and the thickness of the metal oxide film is changed by applying, e.g., barrel polishing so as to adjust the ESR.

Japanese Unexamined Patent Application Publication No. 11-121276 (Patent Document 2) describes that an intermetallic compound between an external electrode and Sn is formed so as to adjust the ESR.

Japanese Unexamined Patent Application Publication No. 2001-223132 (Patent Document 3) describes that an external electrode is configured to have a three-layer structure composed of a first electrically conductive layer formed from an oxidation-resistant metal, a second electrically conductive layer which is disposed thereon and which is a mixture of an electrically conductive oxide and an insulating oxide, and a third electrically conductive layer which is disposed thereon and which is formed from an oxidation-resistant metal so as to increase the ESR.

In an example described in Patent Document 3, the first electrically conductive layer is formed by baking in a $N_2$ or $N_2/H_2$ atmosphere. The second electrically conductive layer primarily contains ruthenium oxide, a ruthenium oxide compound, or graphite, and is formed by baking in the air. The third electrically conductive layer has a primary component containing at least one type of metal selected from Pd, Ag, Pt, Au, Rh, Ir, and Ru, and is formed by baking in the air.

However, individual technologies described in the above-described Patent Documents 1 to 3 have the following problems.

The technology described in Patent Document 1 has a problem in that the adjustment of the ESR is relatively difficult because the ESR is adjusted by the thickness of the metal oxide film.

The technology described in Patent Document 2 has a problem in that it is difficult to attain an adequate ESR because the resistivity of the intermetallic compound is relatively small.

In the technology described in Patent Document 3, the external electrode is a thick film and has a three-layer structure, each layer being formed by baking. Therefore, the thickness of the entire external electrode is increased, and miniaturization of the component is inhibited. Furthermore, since the oxidation-resistant metal is a noble metal, the material costs of the first and the third electrically conductive layer formed from the oxidation-resistant metal are increased.

In the technology described in Patent Document 3, if ruthenium oxide is used as the material for the second electrically conductive layer, baking in an oxidizing atmosphere, e.g., in the air, is indispensable because reduction occurs due to firing in a neutral or reducing atmosphere, e.g., in the $N_2$ atmosphere. However, in order to endure the baking in the oxidizing atmosphere, an expensive noble metal must be used as the material for the internal electrode disposed in the capacitor main body, and it becomes impossible to use Ni or a Ni alloy, which is in the mainstream at present, as the material for the internal electrode.

In the case where a resistant component, e.g., a ruthenium oxide compound which is not reduced, is used as the material for the above-described second electrically conductive layer, a layer for ensuring the continuity to the internal electrode is further required because a highly reliable electrical connection state is not ensured between the second electrically conductive layer and the internal electrode. The above-described first electrically conductive layer has a function of ensuring the continuity to the internal electrode as well. Therefore, in the technology described in Patent Document 3, the first to the third electrically conductive layers are indispensable, and an increase of the thickness of the external electrode cannot be avoided.

Patent Document 1: Japanese Unexamined Patent Application Publication No. 4-337616

Patent Document 2: Japanese Unexamined Patent Application Publication No. 11-121276

Patent Document 3: 2001-223132

JP 2004 128328 A describes a method for manufacturing an electronic component including a step where a dielectric layer and internal electrode layers are alternately piled up to form a main body of an element, a step where a paste for a first conductive layer containing a conductive substance, a glass and a vehicle is applied to the external surface of the main body, so that it may be electrically connected with at least a part of the internal electrode layers. The method further comprises a step where a paste for a second conductive layer containing a metal, a glass and a vehicle is supplied to the external surface of the paste for the first conductive layer, the vehicle is removed in an atmosphere containing oxygen, the main body is heated in a reductive atmosphere containing hydrogen at a temperature lower than a temperature for removing the vehicle, it is baked in an atmosphere containing no oxygen at a temperature higher than the temperature for removing the vehicle, and a first conductive layer and a second conductive layer are formed.

Accordingly, the object of the present invention is to provide a monolithic ceramic capacitor including external electrodes capable of solving the above described problems and a method for adjusting the equivalent serious resistance thereof.

This object is solved by a monolithic ceramic capacitor according to claim 1, and methods for adjusting an equivalent serious resistance of a monolithic ceramic capacitor according to claims 9, 11, 13 and 15.

An aspect of the present invention is directed to a monolithic ceramic capacitor characterized by including a capacitor main body having a layered structure, in which ceramic layers and internal electrodes are layered alternately, and external electrodes disposed on an outer surface of the capacitor main body in such a way as to electrically connect to the internal electrodes, wherein the internal electrode contains Ni or a Ni alloy, and the external electrode includes a first electrically conductive layer containing a compound oxide, which forms an intermetallic compound with the above-described Ni or the Ni alloy, and a glass component in order to solve the above-described technical problems.

Preferably, the above-described compound oxide includes an In-Sn compound oxide.

Preferably, the external electrode further includes a metal plating layer disposed on the outer surface side of the first electrically conductive layer. In this case, more preferably, the external electrode further includes a second electrically conductive layer, which is disposed between the first electrically conductive layer and the metal plating layer and which contains Cu or a Cu alloy, or a second electrically conductive layer including an electrically conductive resin primarily containing an electrically conductive metal component and a thermosetting resin.

Preferably, the above-described metal plating layer includes a Ni plating layer serving as a substrate and a Sn plating layer or a solder plating layer disposed on the Ni plating layer.

The first electrically conductive layer may further include an electrically conductive metal component or an insulating oxide for adjusting the resistance value of the external electrode.

Another aspect of the present invention is directed to a method for adjusting an equivalent series resistance of the above-described monolithic ceramic capacitor, that is, the monolithic ceramic capacitor including a capacitor main body having a layered structure, in which ceramic layers and internal electrodes are layered alternately, and external electrodes disposed on an outer surface of the capacitor main body in such a way as to electrically connect to the internal electrodes, wherein the internal electrode contains Ni or a Ni alloy, and the external electrode includes an electrically conductive layer containing a compound oxide, which forms an intermetallic compound with the above-described Ni or the Ni alloy, and a glass component.

The method for adjusting an equivalent series resistance of a monolithic ceramic capacitor according to an aspect of the present invention is characterized by including the step of adjusting the resistance value of the external electrode by changing at least one of the amount of addition of the glass component contained in the electrically conductive layer and the glass softening point.

Preferably, an In-Sn compound oxide is used as the above-described compound oxide contained in the electrically conductive layer.

In the case where the electrically conductive layer included in the external electrode contains an electrically conductive metal component or an insulating oxide, in addition to a compound oxide and a glass component, the resistance value of the external electrode is adjusted by changing at least one of the amount of addition of the glass component, the glass softening point, and the amount of addition of the electrically conductive metal component or the insulating oxide.

In the case where the external electrode includes a first electrically conductive layer, which contains a compound oxide and a glass component, and a second electrically conductive layer which is disposed on the outer surface side of the first electrically conductive layer and which includes an electrically conductive resin primarily containing an electrically conductive metal component and a thermosetting resin, the resistance value of the external electrode is adjusted by changing at least one of the amount of addition of the glass component contained in the first electrically conductive layer, the glass softening point, and the amount of addition of the electrically conductive metal component contained in the second electrically conductive layer.

In the case where the above-described first electrically conductive layer contains an electrically conductive metal component or an insulating oxide in addition to a compound oxide and a glass component, the resistance value of the external electrode is adjusted by changing at least one of the amount of addition of the glass component contained in the first electrically conductive layer, the glass softening point, the amount of the electrically conductive metal component or an insulating oxide, and the amount of addition of the electrically conductive metal component contained in the second electrically conductive layer.

In the method for adjusting an equivalent series resistance of a monolithic ceramic capacitor according to an aspect of the present invention, the method may further including the step of adjusting the equivalent series resistance of the monolithic ceramic capacitor by changing the length of a side, which is in contact with the first electrically conductive layer, of the lead portion electrically connected to the external electrode with respect to at least one of the internal electrodes.

In the case where the above-described method for adjusting an equivalent series resistance is applied, in the typical structure of the monolithic ceramic capacitor, the length of a side, which is in contact with the first electrically conductive layer, of the lead portion of at least one of the internal electrodes is smaller than the length of the side, which is opposed to the lead portion, of the internal electrode.

Advantages

The inventors of the present invention have conducted various researches on a substance capable of becoming a resistant component (an electrically conductive component having a predetermined resistance value), and as a result, a compound oxides, e.g., an In-Sn compound oxide or a La-Cu compound oxide, which has reacted with Ni or a Ni alloy, has been found.

Since the above-described compound oxide has adequate reduction resistance, baking in a neutral or reducing atmosphere, e.g., a $N_2$ atmosphere, can be applied without problems. As a result, even when Ni or a Ni alloy is used in the internal electrode disposed in the capacitor main body, no problem occurs.

Furthermore, since an intermetallic compound, e.g., a Ni-Sn intermetallic compound or a Ni-Cu intermetallic compound, is formed between the above-described compound oxide and the internal electrode containing Ni or the Ni alloy, a highly reliable electrical connection state between the first electrically conductive layer, which is disposed in the external electrode and which contains the above-described compound oxide, and the internal electrode can be realized. Consequently, a layer for ensuring the continuity between the first electrically conductive layer and the internal electrode is not specifically required, an increase of the thickness of the external electrode can be avoided, and as a result, miniaturization of the monolithic ceramic capacitor is facilitated.

An adequate connection state cannot be achieved when the external electrode and the internal electrode are merely in contact with each other. As described above, the external electrode and the internal electrode are chemically reacted so as to form an intermetallic compound and, thereby, an adequate connection state can be achieved. For the monolithic ceramic capacitor, to which the present invention is directed, in particular, the external electrode and the internal electrode are required to connect with each other adequately. Therefore, there is an important meaning in that a compound oxide, which reacts with Ni or the Ni alloy, is contained in the first electrically conductive layer in direct contact with the internal electrode containing Ni or the Ni alloy.

The resistance value of the first electrically conductive layer containing the above-described compound oxide and the glass component can easily be controlled, as is clear from the effect of the method for adjusting a equivalent series resistance described below.

In the monolithic ceramic capacitor according to an aspect of the present invention, when the external electrode further includes a metal plating layer disposed on the outer surface side of the first electrically conductive layer, the weather resistance of the monolithic ceramic capacitor can be ensured and, in addition, the monolithic ceramic capacitor can be made suitable for a surface-mounting component.

When the external electrode further includes the second electrically conductive layer, which is disposed between the above-described first electrically conductive layer and the metal plating layer and which contains Cu or a Cu alloy, the weather resistance of the monolithic ceramic capacitor can be further improved and, in addition, the monolithic ceramic capacitor can be provided with adequate plating resistance required in the plating step for forming the metal plating layer.

When the external electrode further includes the second electrically conductive layer, which is disposed between the above-described first electrically conductive layer and the metal plating layer and which contains the electrically conductive resin primarily containing the electrically conductive metal component and the thermosetting resin, not only effects similar to those in the above-described case where the second electrically conductive layer containing Cu or the Cu alloy is further included are exerted, but also an effect that the resistance value of the external electrode can also be adjusted by changing the amount of addition of the electrically conductive metal component contained in the second electrically conductive layer is exerted. For the second electrically conductive layer containing Cu or the Cu alloy, a baking treatment at a temperature of, for example, about 800°C is required to form it. However, the second electrically conductive layer containing the above-described electrically conductive resin can be formed by a heat-curing treatment at a relatively low temperature of about 250°C, for example. Therefore, the energy required for heating can be reduced as compared with that in the case where the second electrically conductive layer contains Cu or the Cu alloy, and heating facilities can be further simplified, so that the steps can be further simplified.

When the metal plating layer includes the Ni plating layer serving as a substrate and the Sn plating layer or the solder plating layer disposed on the Ni plating layer, the external electrode can be provided with good solderability and, therefore, the monolithic ceramic capacitor can be made suitable for surface mounting by soldering.

When the first electrically conductive layer further contains the electrically conductive metal component or the insulating oxide for adjusting the resistance value of the external electrode, the resistance value of the external electrode can also be adjusted by changing the amount of addition of the electrically conductive metal component or the insulating oxide.

In the method for adjusting an equivalent series resistance of a monolithic ceramic capacitor according to an aspect of the present invention, the compound oxide, e.g., the In-Sn compound oxide, which is an electrically conductive component having a predetermined resistance value, is used in the electrically conductive layer disposed in the external electrode, and the resistance value of the external electrode is adjusted by changing at least one of the amount of addition of the glass component, which is an electrically insulating component, and the glass softening point. Therefore, the equivalent series resistance of the monolithic ceramic capacitor can easily be adjusted.

In the case where the above-described electrically conductive layer further contains the electrically conductive metal component or the insulating oxide, the resistance value of the external electrode can also be adjusted by changing the amount of addition of the electrically conductive metal component or the insulating oxide in addition to the change of at least one of the amount of addition of the glass component and the glass softening point. Consequently, the diversification of methods for adjusting the resistance value of the external electrode can be facilitated.

In the case where the external electrode includes the second electrically conductive layer which is disposed on the outer surface side of the first electrically conductive layer and which includes the electrically conductive resin primarily containing the electrically conductive metal component and the thermosetting resin, besides the above-described electrically conductive layer, that is, the first electrically conductive layer, not only the adjustment of the resistance value on the first electrically conductive layer side, but also the adjustment of the resistance value by changing the amount of addition of the electrically conductive metal component contained in the second electrically conductive layer becomes possible. Consequently, the diversification of methods for adjusting the resistance value of the external electrode can be further facilitated.

Furthermore, in the method for adjusting an equivalent series resistance of a monolithic ceramic capacitor according to an aspect of the present invention, the equivalent series resistance of a monolithic ceramic capacitor can also be adjusted by changing the length of the side, which is in contact with the first electrically conductive layer, of the lead portion disposed in the internal electrode. Consequently, the adjustment width of the equivalent series resistance can be further increased by adopting this method.

Brief Description of the Drawings

[Fig. 1] Fig. 1 is a front view illustrating a monolithic ceramic capacitor 1 according to a first embodiment of the present invention with reference to a cross section along the stacking direction.
[Fig. 2] Fig. 2 is a front view illustrating a monolithic ceramic capacitor 11 according to a second embodiment of the present invention with reference to a cross section along the stacking direction.
[Fig. 3] Fig. 3 is a front view illustrating a monolithic ceramic capacitor 21 according to a third embodiment of the present invention with reference to a cross section along the stacking direction.
[Fig. 4] Fig. 4 is a plan view illustrating a monolithic ceramic capacitor 31 according to a fourth embodiment of the present invention with reference to a cross section extending in a direction of a principal surface of a ceramic layer 3.
[Fig. 5] Fig. 5 is a diagram showing the relationship between the Ag exposure factor and the ESR based on the data obtained in Experimental example 4.

Reference Numerals

| | |
|---|---|
| 1, 11, 21, 31 | monolithic ceramic capacitor |
| 2 | capacitor main body |
| 3 | ceramic layer |
| 4, 5 | internal electrode |
| 6, 7 | external electrode |
| 8 | first electrically conductive layer |
| 9 | metal plating layer |
| 12, 12a | second electrically conductive layer |
| 32 | lead portion |
| 33, 34 | length of side |

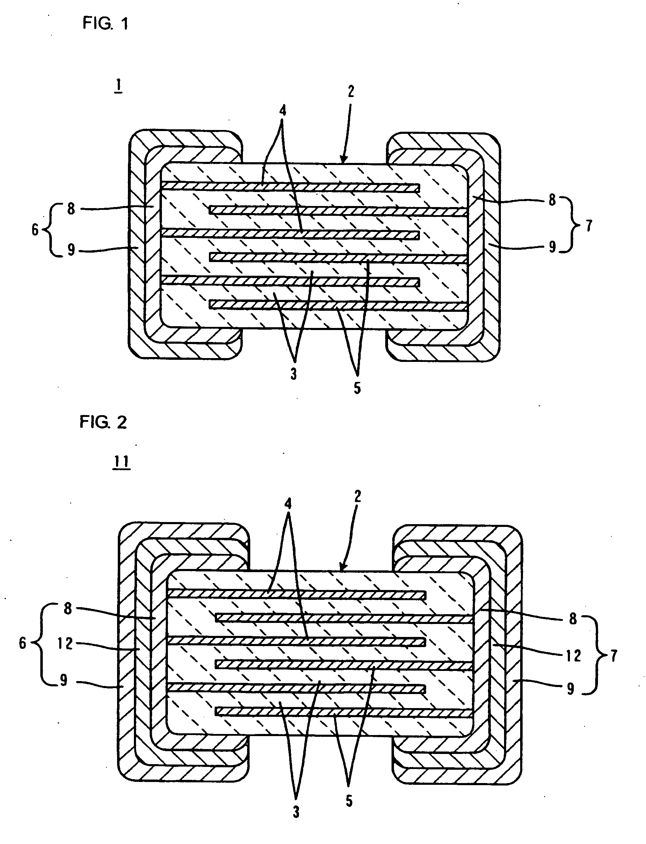

Fig. 1 shows a monolithic ceramic capacitor 1 according to a first embodiment of the present invention.

The monolithic ceramic capacitor 1 includes a capacitor main body 2. The capacitor main body 2 has a layered structure in which a plurality of ceramic layers 3 formed from dielectric ceramic and internal electrodes 4 and 5 containing Ni or a Ni alloy are layered alternately. The internal electrodes 4 and the internal electrodes 5 are disposed in a staggered configuration, and are opposed to each other with ceramic layers 3 therebetween, so that capacitance is formed.

External electrodes 6 and 7 are disposed on the outer surface of the capacitor main body 2, specifically on opposed end portions. One external electrode 6 is electrically connected to the internal electrodes 4, and the other external electrode 7 is electrically connected to the internal electrodes 5.

In the above-described monolithic ceramic capacitor 1, each of the external electrodes 6 and 7 includes an electrically conductive layer 8 containing a compound oxide, e.g., an In-Sn compound oxide, which serves as an electrically conductive component having a predetermined resistance value and which reacts with Ni or a Ni alloy, and a glass component serving as an electrically insulating component and a metal plating layer 9 disposed thereon.

Examples of compound oxides, which react with Ni or the Ni alloy, as described above, include a La-Cu compound oxide and a Sr-Fe compound oxide, besides the In-Sn compound oxide. With respect to the In-Sn compound oxide, the La-Cu compound oxide, and the Sr-Fe compound oxide, Sn, Cu, and Fe, respectively, as metal elements contained therein, react with Ni or the Ni alloy.

In the case where the electrically conductive layer 8 contains the In-Sn compound oxide, the electrically conductive layer 8 is formed by applying a paste containing an In-Sn compound oxide powder, glass frit, and an organic binder to the end portions of the capacitor main body 2, followed by baking in a $N_2$ atmosphere, for example. The above-described In-Sn compound oxide powder can be produced, for example, in such a way that an $In_2O_3$ powder is mixed with a predetermined amount of $SnO_2$ powder, calcination is performed in the air under the temperature and time conditions suitable for formation of adequate solid solution of $SnO_2$ and, thereafter, a grinding treatment is performed. Preferably, the amount of addition of $SnO_2$ powder is selected in such a way that the $SnO_2$ powder becomes within the range of 1 to 15 percent by weight relative to a total amount of $In_2O_3$ powder and $SnO_2$ powder from the view point of the electrical conductivity and the reduction resistance.

The electrically conductive layer 8 may further contain an electrically conductive metal component, e.g., Ag, or an insulating oxide, e.g., $Al_2O_3$ or $ZrO_2$, in order to adjust the resistance values of the external electrodes 6 and 7.

Although not shown in the drawing in detail, it is preferable that the metal plating layer 9 includes a Ni plating layer serving as a substrate and a Sn plating layer or a solder plating layer disposed on the Ni plating layer.

In the above-described monolithic ceramic capacitor 1, the electrically conductive layer 8 can be baked in a neutral or reducing atmosphere, e.g., a $N_2$ atmosphere, because the compound oxide, e.g., the In-Sn compound oxide, contained in the electrically conductive layer 8 has adequate reduction resistance. In this baking step, when the electrically conductive layer 8 contains, for example, the In-Sn compound oxide, a highly reliable electrical connection state between the electrically conductive layer 8 and the internal electrodes 4 and 5 can be ensured because a Ni-Sn intermetallic compound is formed between the In-Sn compound oxide and Ni or the Ni alloy contained in the internal electrodes 4 and 5.

When the electrically conductive layer 8 contains the La-Cu compound oxide, a Ni-Cu intermetallic compound is formed between the La-Cu compound oxide and Ni or the Ni alloy contained in the internal electrodes 4 and 5, and when the electrically conductive layer 8 contains the Sr-Fe compound oxide, a Ni-Fe intermetallic compound is formed between the Sr-Fe compound oxide and Ni or the Ni alloy contained in the internal electrodes 4 and 5. Consequently, a highly reliable electrical connection state between the electrically conductive layer 8 and the internal electrodes 4 and 5 can be ensured.

The presence of the metal plating layer 9 in each of the external electrodes 6 and 7 ensures the weather resistance of the monolithic ceramic capacitor 1, and can provide good solderability to the external electrodes 6 and 7 when the monolithic ceramic capacitor 1 is surface-mounted.

In order to adjust the equivalent series resistance (ESR) of the monolithic ceramic capacitor 1, the resistance values of the external electrodes 6 and 7 are adjusted. The resistance values of the external electrodes 6 and 7 are controlled substantially by the resistance value of the electrically conductive layer 8. In the electrically conductive layer 8, the compound oxide, e.g., the In-Sn compound oxide, functions as an electrically conductive component having a predetermined resistance value, and the glass component functions as an electrically insulating component. Therefore, the adjustment of the resistance value of the electrically conductive layer 8 can easily be performed by changing at least one of the amount of addition of the glass component contained therein and the glass softening point, as is ascertained in Experimental example described below.

When the electrically conductive layer 8 further contains an electrically conductive metal component, e.g., Ag, this electrically conductive metal component functions as an electrically conductive component for reducing the resistance value. Conversely, when the electrically conductive layer 8 further contains an insulating oxide, e.g., $Al_2O_3$ or $ZrO_2$, this insulating oxide functions as an insulating component for increasing the resistance value. Therefore, in this case, the resistance value of the electrically conductive layer 8, and by extension the resistance values of the external electrodes 6 and 7, can be adjusted by changing at least one of the amount of addition of the glass component, the glass softening point, and the amount of addition of the electrically conductive metal component or the insulating oxide. As a result, the ESR of the monolithic ceramic capacitor 1 can be adjusted.

Fig. 2 shows a monolithic ceramic capacitor 11 according to a second embodiment of the present invention. The monolithic ceramic capacitor 11 shown in Fig. 2 includes many elements common to those in the monolithic ceramic capacitor 1 shown in the above-described Fig. 1. Therefore, in Fig. 2, the elements corresponding to the elements shown in Fig. 1 are indicated by the same reference numerals as those set forth above and explanations thereof will not be repeated.

The monolithic ceramic capacitor 11 shown in Fig. 2 is characterized in that each of external electrodes 6 and 7 further includes a second electrically conductive layer 12 containing Cu or a Cu alloy. The second electrically conductive layer 12 is disposed on the outer surface side of the first electrically conductive layer 8, that is, between the first electrically conductive layer 8 and the metal plating layer 9.

For example, the second electrically conductive layer 12 can be formed by applying a paste containing a Cu powder or a Cu alloy powder, glass frit, and an organic vehicle to the first electrically conductive layer 8 in such a way as to cover the first electrically conductive layer 8, followed by baking.

According to the second embodiment, the weather resistance of the monolithic ceramic capacitor 11 can be further improved by the presence of the second electrically conductive layer 12. In addition, the monolithic ceramic capacitor 11 can be provided with adequate plating resistance required in the plating step for forming the metal plating layer 9.

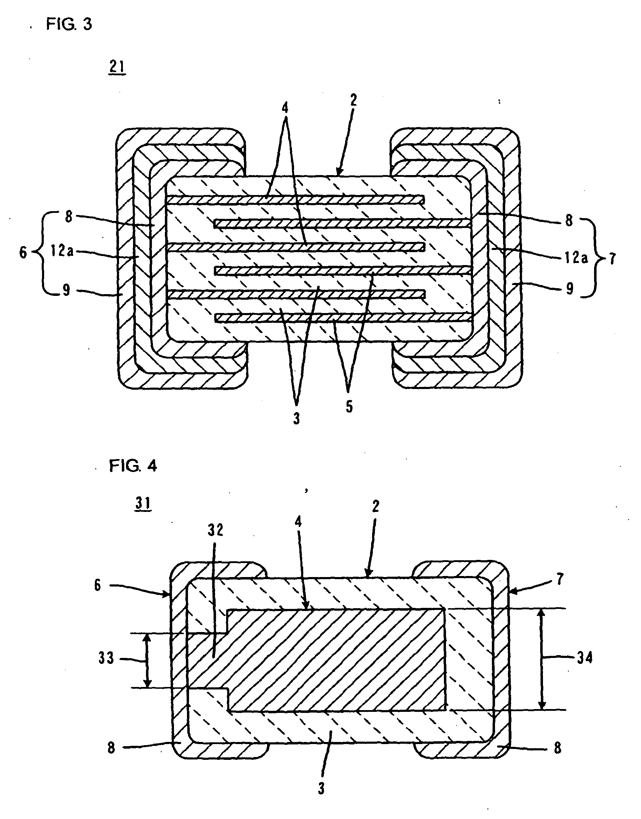

Fig. 3 shows a monolithic ceramic capacitor 21 according to a third embodiment of the present invention. The monolithic ceramic capacitor 21 shown in Fig. 3 includes many elements common to those in the monolithic ceramic capacitor 1 shown in the above-described Fig. 1 or the monolithic ceramic capacitor 11 shown in Fig. 2. Therefore, in Fig. 3, the elements corresponding to the elements shown in Fig. 1 or Fig. 2 are indicated by the same reference numerals as those set forth above and explanations thereof will not be repeated.

The monolithic ceramic capacitor 21 shown in Fig. 3 is characterized in that each of external electrodes 6 and 7 further includes a second electrically conductive layer 12a including an electrically conductive resin primarily containing an electrically conductive metal component and a thermosetting resin. The second electrically conductive layer 12a is disposed on the outer surface side of the first electrically conductive layer 8, that is, between the first electrically conductive layer 8 and the metal plating layer 9.

For example, the second electrically conductive layer 12a can be formed by applying an electrically conductive resin containing an electrically conductive metal component, e.g., a Ag powder, and a thermosetting resin, e.g., a phenol resin, to the first electrically conductive layer 8 in such a way as to cover the first electrically conductive layer 8, followed by heat curing.

According to the third embodiment, not only the weather resistance can be improved and the plating resistance can be provided by the presence of the second electrically conductive layer 12a, as in the second embodiment, but also the resistance values of the external electrodes 6 and 7 can also be adjusted by changing the amount of addition of the electrically conductive metal component contained in the second electrically conductive layer 12a. That is, the exposure factor of the electrically conductive metal component at the surface of the second electrically conductive layer 12a is changed by changing the amount of addition of the electrically conductive metal component and, thereby, the resistance values of the external electrodes 6 and 7 can be adjusted.

The second electrically conductive layer 12a can be formed by a heat-curing treatment at a relatively low temperature of about 250°C, for example. Therefore, the energy required for the heating in this heat curing can be reduced, and heating facilities can be further simplified, so that the steps can be further simplified.

In the first and the second embodiments, the first electrically conductive layer 8 may contain or may not contain the electrically conductive metal component, e.g., Ag, or the insulating oxide, e.g., $Al_2O_3$ or $ZrO_2$.

Fig. 4 is a plan view illustrating a monolithic ceramic capacitor 31 according to a fourth embodiment of the present invention with reference to a cross section extending in a direction of a principal surface of a ceramic layer 3. The monolithic ceramic capacitor 31 shown in Fig. 4 includes many elements common to those in the monolithic ceramic capacitor 1 shown in the above-described Fig. 1. Therefore, in Fig. 4, the elements corresponding to the elements shown in Fig. 1 are indicated by the same reference numerals as those set forth above and explanations thereof will not be repeated.

The structure of the monolithic ceramic capacitor 31 is characterized in that the length 33 of a side, which is in contact with the first electrically conductive layer 8, of the lead portion 32, which is electrically connected to the external electrode 6, of the internal electrode 4 is smaller than the length 34 of the side, which is opposed to the lead portion 32, of the internal electrode 4. Although not shown in Fig. 4, substantially the same configuration as that of the internal electrode 4 is adopted for the internal electrode 5 opposed to the internal electrode 4 with the ceramic layer 3 therebetween.

The above-described structural features result from application of the following ESR adjusting method.

In the above-described first to third embodiments, the ESRs of the monolithic ceramic capacitors 1, 11, and 21 are adjusted by adjusting the resistance values of the external electrodes 6 and 7 themselves. However, in the fourth embodiment, the ESR of the monolithic ceramic capacitor 31 is adjusted by changing the length 33 of the side, which is in contact with the first electrically conductive layer 8, of the lead portion 32, in addition to the adjustment of the resistance values of the external electrodes 6 and 7.

In the case where the first electrically conductive layer exhibits a relatively high resistance value, the ESR of the monolithic ceramic capacitor 31 can be changed to a relatively large degree by changing the length 33 of the side, which is in contact with the first electrically conductive layer 8, of the lead portion 32, as is clear from Experimental example described below. Therefore, according to the fourth embodiment, a wider adjustment width can be realized with respect to the ESR adjustment.

In the above description, the length 33 of the side of the lead portion 32 in the internal electrode 4 is changed. Preferably, the length of the side of the lead portion in the other internal electrode 5 is changed likely. The lengths of the sides of all the internal electrodes 4 and 5 may not be changed to adjust the ESR. The change of length of the side may be performed in at least one of the internal electrodes 4 and 5.

The external electrodes 6 and 7 disposed in the monolithic ceramic capacitor 31 shown in Fig. 4 are composed of merely the first electrically conductive layer 8. However, this is not an essential feature of the fourth embodiment. The configuration included in the external electrodes 6 and 7 shown in Fig. 1, Fig. 2, or Fig. 3 may be adopted in the monolithic ceramic capacitor 31 according to the fourth embodiment.

Up to this point, the present invention has been described with reference to illustrated embodiments. However, other various modification can be made within the scope of the present invention.

For example, the external electrodes 6 and 7 include the electrically conductive layers 8 and the metal plating layer 9 in the first embodiment, and have the layered structures including the first electrically conductive layers 8, the second electrically conductive layer 12 or 12a, and the metal plating layer 9 in the second and the third embodiments. However, layers having other functions may be further interposed between these layers.

In the illustrated embodiments, both the external electrodes 6 and 7 include the electrically conductive layer 8 and the like and, thereby, are also provided with the function as the resistance element. However, the structure including the electrically conductive layer 8 and the like for providing the function as the resistance element may be adopted in only one of the external electrodes 6 and 7.

The experimental examples carried out to ascertain the effects of the present invention will be described below.

(Experimental example 1)

Experimental example 1 was carried out to ascertain the effects of the compound oxide, which constitutes a distinctive configuration of the present invention and which reacts with Ni or a Ni alloy, in particular the In-Sn compound oxide and the La-Cu compound oxide.

A capacitor main body designed in such a way that an internal electrode contains Ni and the capacitance becomes 1 $\mu$F was prepared for a monolithic ceramic capacitor by a known method.

On the other hand, in order to form an electrically conductive layer containing a resistance component, an electrically conductive layer paste was prepared as described below, in the example within the scope of the present invention.

In an example containing the In-Sn compound oxide, an $In_2O_3$ powder was mixed with a $SnO_2$ powder in such a way that the content of the $SnO_2$ powder becomes 5 percent by weight relative to a total amount of the $In_2O_3$ powder and the $SnO_2$ powder, and calcination was performed in the air at 1,400°C for 5 hours, so that $SnO_2$ was allowed to

form a solid solution adequately. Thereafter, a grinding treatment was performed until the average particle diameter became about 1 $\mu$m, so that an In-Sn compound oxide powder was produced. It was ascertained that even when the amount of addition of the above-described $SnO_2$ powder was varied within the range of 1 to 15 percent by weight, the In-Sn compound oxide exhibited nearly equal electrical conductivity.

The thus produced In-Sn compound oxide powder was mixed with glass frit (B-Si-Zn-Ba-Ca-Al based glass, softening point: about 560°C, average particle diameter: about 1 $\mu$m) and an organic vehicle containing 80 parts by weight of terpineol based organic solvent and 20 parts by weight of acrylic resin binder in such a way that a volume ratio, "In-Sn compound oxide":"glass":"organic vehicle", became 1:1:8, and a roll dispersion treatment was performed, so that an electrically conductive layer paste containing the In-Sn compound oxide was produced.

Each end portion of the thus prepared capacitor main body was coated with the above-described electrically conductive layer paste by a dip method, followed by drying at a temperature of 150°C for 10 minutes. The coating film thickness after the drying was about 60 $\mu$m.

The capacitor main body coated with the electrically conductive layer paste and dried, as described above, was passed through a continuous belt furnace, so as to be subjected to a heat treatment to keep at a maximum temperature of 780°C for 15 minutes in a $N_2$ atmosphere (oxygen concentration: 10 ppm or less), so that a monolithic ceramic capacitor serving as a sample was produced.

In an example containing the La-Cu compound oxide, an $La_2O_3$ powder and a CuO powder was mixed at a molar ratio of 1:1, and calcination was performed in the air at 1,500°C for 5 hours, so that the reaction was performed adequately. Thereafter, a grinding treatment was performed until the average particle diameter became about 1 $\mu$m, so that an La-Cu compound oxide powder was produced.

Subsequently, an electrically conductive layer paste containing the La-Cu compound oxide was produced through the operation similar to that for the above-described In-Sn compound oxide powder. A monolithic ceramic capacitor serving as a sample was produced by using the resulting paste.

For Comparative examples, an electrically conductive paste was prepared by using $RuO_2$, a Ca-Sr-Ru compound oxide, or graphite in place of the In-Sn compound oxide or the La-Cu compound oxide. A monolithic ceramic capacitor serving as a sample was prepared in a manner similar to those in the example.

The capacitance and the ESR of the monolithic ceramic capacitor of each sample were measured and, in addition, it was evaluated whether the reduction of the resistance component contained in the electrically conductive layer occurred or not by using X-ray diffraction. The results thereof are shown in Table 1.

[Table 1]

| Electrically conductive layer resistance component | Capacitance ($\mu$F) | ESR (m$\Omega$) | Occurrence of reduction |
|---|---|---|---|
| In-Sn compound oxide | 1.07 | 252 | none |
| La-Cu compound oxide | 1.07 | 3528 | none |
| $RuO_2$ | 1.07 | 19.5 | yes |
| Ca-Sr-Ru compound oxide | 0.002 | measurement was impossible | none |
| Graphite | 0.001 | measurement was impossible | - |

In Table 1, the capacitance and the ESR are represented by an average value of ten samples.

As is clear from Table 1, when the In-Sn compound oxide or the La-Cu compound oxide was used in the electrically conductive layer serving as the external electrode, reduction does not occur by a heat treatment in the $N_2$ atmosphere, the capacitance was obtained as designed, and satisfactorily large ESR was able to be obtained.

On the other hand, in a comparative example in which $RuO_2$ was used, reduction occurred by a heat treatment in the $N_2$ atmosphere, and a not-so-large ESR was able to be obtained.

In a comparative example in which Ca-Sr-Ru compound oxide was used, although reduction did not occur by a heat treatment in the $N_2$ atmosphere, good electrical connection state between the electrically conductive layer and the internal electrode was not ensured. Consequently, the measured capacitance was very small, and the measurement of ESR was impossible.

In a comparative example in which graphite was used as well, the measured capacitance was very small, and the measurement of ESR was impossible.

(Experimental example 2)

Experimental example 2 was carried out to ascertain that the ESR of the monolithic ceramic capacitor was able to be adjusted by the amount of addition of the glass component contained in the electrically conductive layer, the glass softening point, and the amount of addition of the electrically conductive metal component.

(1) ESR adjustment by amount of addition of glass component

In the electrically conductive layer paste containing the In-Sn compound oxide prepared as the example in the above-described Experimental example 1, the volume ratio, "In-Sn compound oxide":"glass" was 1:1 (= 5:5). In addition to this, an electrically conductive paste having the volume ratio of 8:2 and an electrically conductive paste having the volume ratio of 7:3 were prepared individually. A monolithic ceramic capacitor serving as a sample was prepared in a manner similar to that in Experimental example 1, the ESRs of ten samples were measured, and the average value and the standard deviation thereof were determined. Furthermore, the dispersion (3CV) thereof was determined on the basis of the following equation.

$$3CV \ [\%] = 3(\text{standard deviation})/(\text{average value}) \times 100$$

The thus determined average values and dispersions (3CV) are shown in Table 2.

[Table 2]

| In-Sn compound oxide:Glass | ESR | |
|---|---|---|
| | Average value (mΩ) | 3CV (%) |
| 8:2 | 92 | 8.7 |
| 7:3 | 160 | 9.5 |
| 5:5 | 252 | 8.0 |

In Table 2, the sample exhibiting "In-Sn compound oxide":"glass" of "5:5" is equivalent to the example in Experimental example 1.

As is clear from Table 2, the ESR was able to be adjusted by changing the amount of addition of the glass component, and the dispersion of the adjusted ESR was relatively small.

(2) ESR adjustment by glass softening point

In the electrically conductive layer paste containing the In-Sn compound oxide prepared as the example in Experimental example 1, the glass component having the softening point of about 560°C was contained. In addition to this, an electrically conductive layer paste containing the same composition based glass component having a softening point of about 580°C and an electrically conductive layer paste containing a glass component having a softening point of about 600°C were further prepared. A monolithic ceramic capacitor serving as a sample was prepared from each of the electrically conductive layer pastes in a manner similar to that in Experimental example 1. The ESRs of ten samples were measured, and the average value thereof was determined. Furthermore, the dispersion (3CV) thereof was determined. The results thereof are shown in Table 3.

[Table 3]

| Glass softening point | ESR | |
|---|---|---|
| | Average value (mΩ) | 3CV (%) |
| about 560°C | 252 | 8.0 |
| about 580°C | 521 | 10.5 |
| about 600°C | 1813 | 14.1 |

In Table 3, the sample exhibiting "glass softening point" of "about 560°C" is equivalent to the example in Experimental example 1.

As is clear from Table 3, the ESR was able to be adjusted by changing the glass softening point of the glass component contained in the electrically conductive layer paste, and the dispersion of the adjusted ESR was relatively small.

In this experiment, the glass softening point was changed by using the same composition based glass component as in the example of Experimental example 1 and changing the ratio of the constituent elements. However, the glass softening point may be changed by changing the types of constituent elements.

(3) ESR adjustment by addition of metal

In the electrically conductive layer paste containing the In-Sn compound oxide prepared as the example in Experimental example 1, the electrically conductive metal component was not contained. However, electrically conductive pastes in which a Ag powder was added in such a way that the content thereof becomes 5 percent by volume, 10 percent by volume, and 20 percent by volume, respectively, relative to the total amount of the Ag powder and the In-Sn compound oxide powder were further prepared. A monolithic ceramic capacitor serving as a sample was prepared from each of the electrically conductive layer pastes in a manner similar to that in Experimental example 1. The ESRs of ten samples were measured, and the average value thereof was determined. Furthermore, the dispersion (3CV) thereof was determined. The results thereof are shown in Table 4.

[Table 4]

| Amount of addition of Ag | ESR | |
|---|---|---|
| | Average value (mΩ) | 3CV (%) |
| 0 percent by volume | 252 | 8.0 |
| 5 percent by volume | 181 | 10.5 |
| 10 percent by volume | 149 | 14.1 |
| 20 percent by volume | 98 | 13.3 |

In Table 4, the sample exhibiting "amount of addition of Ag" of "0" is equivalent to the example in Experimental example 1.

As is clear from Table 4, the ESR was able to be adjusted by adding the electrically conductive metal component to the electrically conductive layer paste or changing the amount of addition of the electrically conductive metal component, and the dispersion of the adjusted ESR was relatively small.

(4) ESR adjustment by addition of insulating oxide

In the electrically conductive layer paste containing the In-Sn compound oxide prepared as the example in Experimental example 1, the insulating oxide was not contained. However, electrically conductive layer pastes in which an $Al_2O_3$ powder or a $ZrO_2$ powder serving as the insulating oxide was added in such a way that the content thereof becomes 5 percent by volume, 10 percent by volume, and 20 percent by volume, respectively, relative to the total amount of the $Al_2O_3$ powder or the $ZrO_2$ powder and the In-Sn compound oxide powder were further prepared. A monolithic ceramic capacitor serving as a sample was prepared from each of the electrically conductive layer pastes in a manner similar to that in Experimental example 1. The ESRs of ten samples were measured, and the average value thereof was determined. Furthermore, the dispersion (3CV) thereof was determined. The results thereof are shown in Table 5 and Table 6.

[Table 5]

| Amount of addition of $Al_2O_3$ | ESR | |
|---|---|---|
| | Average value (mΩ) | 3CV (%) |
| 0 | 252 | 8.0 |
| 5 | 308 | 12.5 |
| 10 | 653 | 17.1 |

(continued)

| Amount of addition of $Al_2O_3$ | ESR | |
| --- | --- | --- |
| | Average value (m$\Omega$) | 3CV (%) |
| 20 | 2432 | 18.3 |

[Table 6]

| Amount of addition of $ZrO_2$ | ESR | |
| --- | --- | --- |
| | Average value (m$\Omega$) | 3CV (%) |
| 0 | 252 | 8.0 |
| 5 | 350 | 11.9 |
| 10 | 809 | 15.4 |
| 20 | 2745 | 16.3 |

In Table 5 and Table 6, the samples exhibiting "amount of addition of $Al_2O_3$" of "0" and "amount of addition of $ZrO_2$" of "0", respectively, are equivalents to the example in Experimental example 1.

As is clear from Table 5 and Table 6, the ESR was able to be adjusted by adding the insulating oxide to the electrically conductive layer paste or changing the amount of addition of the insulating oxide, and the dispersion of the adjusted ESR was relatively small.

(Experimental example 3)

Experimental example 3 was carried out to ascertain the effects of disposition of the second electrically conductive layer, which contains Cu or the Cu alloy, between the electrically conductive layer, that is, the first electrically conductive layer and the metal plating layer in the case where the metal plating layer is disposed on the outer surface side of the electrically conductive layer.

In Experimental example 3, the first electrically conductive layer paste, in which 10 percent by volume of Ag powder described in item (3) of Experimental example 2 was added relative to a total amount of the Ag powder and the In-Sn compound oxide powder, was used. A monolithic ceramic capacitor was prepared in a manner similar to that in Experimental example 1 except that the thickness of the first electrically conductive layer paste after application and drying was set at about 40 $\mu$m and a heat treatment to keep at a maximum temperature of 700°C for 15 minutes was adopted.

A half of the resulting monolithic ceramic capacitors were coated with an electrically conductive paste containing a Cu powder, glass, and an organic vehicle in such a way as to cover the first electrically conductive layer. Both the samples coated with the electrically conductive paste, as described above, and the samples not coated with the electrically conductive paste were subjected to a second baking to keep in a $N_2$ atmosphere at a maximum temperature of 750°C for 15 minutes. With respect to the sample coated with the electrically conductive paste, the second electrically conductive layer was formed on the first electrically conductive layer. The ESR of each sample was measured at this stage. A known barrel plating method was applied to all samples, so that Ni plating and Sn plating were applied sequentially. The ESR after the plating was measured. The rates of change of the ESR after the plating relative to the ESR before the plating of ten samples were calculated, and an average value thereof was determined. A reliability test was carried out by applying a voltage and standing at a high temperature, and an average life until the insulation resistance value was two orders of magnitude reduced was determined. The results thereof are shown in Table 7.

[Table 7]

| Second electrically conductive layer | Rate of change of ESR after plating | Average life (hour) |
| --- | --- | --- |
| none | -24% | 75 |
| present | -1.8% | > 100 |

As is clear from Table 7, when the second electrically conductive layer was present under the metal plating layer, the rate of change of the ESR was able to be reduced and the average life was able to be increased. Therefore, excellent plating resistance and excellent weather resistance were exhibited.

(Experimental example 4)

Experimental example 4 was carried out to ascertain the effects of disposition of the second electrically conductive layer, which includes the electrically conductive resin primarily containing the electrically conductive metal component and the thermosetting resin, between the electrically conductive layer, that is, the first electrically conductive layer and the metal plating layer in the case where the metal plating layer is disposed on the outer surface side of the electrically conductive layer.

In the Experimental example 4, with respect to the electrically conductive layer paste, an In-Sn compound oxide powder similar to that prepared in Experimental example 1 was mixed with glass frit and an organic vehicle similar to those used in Experimental example 1, as well as a Ag powder (average particle diameter: about 1 $\mu$m) for adjusting the resistance value, in such a way that a volume ratio, "In-Sn compound oxide":"glass":"Ag":"organic vehicle" becomes 9.7:10:0.3:80, and a roll dispersion treatment was performed, so that a first electrically conductive layer paste was produced.

Each end portion of a capacitor main body similar to that used in Experimental example 1 was coated with the above-described first electrically conductive layer paste by a dip method, followed by drying at a temperature of 150°C for 10 minutes. The coating film thickness after the drying was about 60 $\mu$m.

The capacitor main body coated with the first electrically conductive layer paste and dried, as described above, was passed through a continuous belt furnace, so as to be subjected to a heat treatment to keep at a maximum temperature of 780°C for 15 minutes in a $N_2$ atmosphere (oxygen concentration: 10 ppm or less), so that a monolithic ceramic capacitor, in which the first electrically conductive layer was disposed in the external electrode, was produced. When the ESR was measured at this stage, the average value of ten samples was 134 m$\Omega$.

Subsequently, an electrically conductive resin containing a Ag powder as the electrically conductive metal component and a phenol resin as the thermosetting resin was applied to the first electrically conductive layer of the above-described monolithic ceramic capacitor, and this was cured under the curing condition of a temperature of 250°C for 60 minutes, so that a second electrically conductive layer was formed. The ESR was measured at this stage (before plating). This ESR is shown in the column "Before plating" in Table 8.

Here, three types of electrically conductive resins in which the volume ratios of Ag were different, that is, the electrically conductive resin related to each of Sample Nos. 1, 2, and 3, was prepared as the above-described electrically conductive resin, and the samples having different Ag exposure factors were prepared, as shown in Table 8.

A known barrel plating method was applied and, thereby, Ni plating and Sn plating were applied sequentially. The ESR after the plating was also measured. The rate of change of the ESR after the plating relative to the ESR before the plating was determined. The results thereof are shown in each of the columns "After plating" and "Rate of change of ESR after plating" in Table 8.

[Table 8]

| Sample No. | Ag exposure factor | Before plating | After plating | Rate of change of ESR after plating |
|---|---|---|---|---|
| 1 | 49.6 % | 284 mQ | 285 m$\Omega$ | ±0% |
| 2 | 30.3% | 483 m$\Omega$ | 488 m$\Omega$ | +1% |
| 3 | 23.7% | 625 m$\Omega$ | 631 m$\Omega$ | +1% |

The values shown in Table 8 are average values of ten samples.

When comparisons are made between the ESR value shown in the column "Before plating" and the above-described ESR value of "134 m$\Omega$" before formation of the second electrically conductive layer, it is clear that the ESR value is increased by the formation of the second electrically conductive layer and, therefore, the ESR value can also be changed by the formation of the second electrically conductive layer.

It is clear on the basis of the values in columns "Before plating", "After plating", and "Rate of change of ESR after plating" that the ESR values are hardly changed between before and after the plating and, therefore, adequate plating resistance is provided by the formation of the second electrically conductive layer.

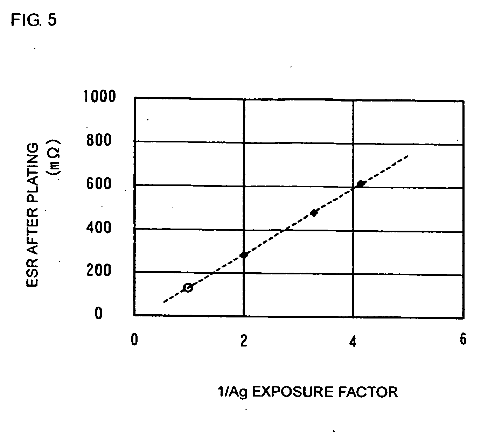

Fig. 5 shows the relationship between the reciprocal of the Ag exposure factor, that is, "1/Ag exposure factor", of the second electrically conductive layer and "ESR after plating". The "1/Ag exposure factor" is expressed in such a way that the Ag exposure factor of 100% is assumed to be "1". In Fig. 5, the point plotted with "O" indicates the case before the formation of the second electrically conductive layer, that is, the case where the surface of the external electrode is entirely covered with the electrically conductive metal (corresponding to the case where the Ag exposure factor is 100%).

As is clear from Fig. 5, good proportionality is observed between the reciprocal of the Ag exposure factor and the ESR. This indicates that the resistance value can be controlled by changing the volume ratio (blending ratio) of Ag and, thereby, changing the exposure area of Ag in the second electrically conductive layer.

(Experimental example 5)

Experimental example 5 was carried out to ascertain that the ESR of the monolithic ceramic capacitor was able to be adjusted by changing the dimension in the width direction of the lead portion of the internal electrode.

A capacitor main body designed in such a way that an internal electrode contains Ni and the capacitance becomes 1 $\mu$F was prepared for a monolithic ceramic capacitor by a known method. At this time, three types of capacitor main bodies were prepared, wherein the length of the side, which was exposed at the end surface of the capacitor main body, of the lead portion of the internal electrode (that is, the dimension in the width direction of the lead portion) was set at 1,500 $\mu$m, 1,000 $\mu$m, or 500 $\mu$m. In each of the three types of capacitor main bodies, the length of the side opposed to the lead portion of the internal electrode was 3,000 $\mu$m.

On the other hand, in order to form an electrically conductive layer containing a resistance component, in the example within the scope of the present invention, an electrically conductive layer paste was prepared as described below.

An $In_2O_3$ powder was mixed with a $SnO_2$ powder in such a way that the content of the $SnO_2$ powder became 5 percent by weight relative to a total amount of the $In_2O_3$ powder and the $SnO_2$ powder, and calcination was performed in the air at 1,400°C for 5 hours, so that $SnO_2$ was allowed to form a solid solution adequately. Thereafter, a grinding treatment was performed until the average particle diameter became about 1 $\mu$m, so that an In-Sn compound oxide powder was produced.

The thus produced In-Sn compound oxide powder was mixed with glass frit (B-Si-Zn-Ba-Ca-Al based glass, softening point: about 560°C, average particle diameter: about 1 $\mu$m), a Ag powder (average particle diameter: about 1 $\mu$m) for controlling the resistance value, and an organic vehicle containing 80 parts by weight of terpineol based organic solvent and 20 parts by weight of acrylic resin binder in such a way that a volume ratio, "In-Sn compound oxide":"glass":"Ag":"organic vehicle", became 9.7:10:0.3:80, and a roll dispersion treatment was performed, so that an electrically conductive layer paste was produced.

Each end portion of the thus prepared capacitor main body was coated with the above-described electrically conductive layer paste by a dip method, followed by drying at a temperature of 150°C for 10 minutes. The coating film thickness after the drying was about 60 $\mu$m.

The capacitor main body coated with the electrically conductive layer paste and dried, as described above, was passed through a continuous belt furnace, so as to be subjected to a heat treatment to keep at a maximum temperature of 780°C for 15 minutes in a $N_2$ atmosphere (oxygen concentration: 10 ppm or less), so that a monolithic ceramic capacitor serving as a sample of an example was produced.

On the other hand, for comparative example, an electrically conductive layer paste containing a Cu powder, glass, and an organic vehicle was prepared in place of the electrically conductive layer paste related to the above-described example. Each end portion of the capacitor main body prepared as described above was coated with the resulting electrically conductive layer paste by a dip method, followed by drying. Thereafter, a heat treatment to keep at a maximum temperature of 750°C for 15 minutes in a $N_2$ atmosphere was performed, so that a monolithic ceramic capacitor serving as a sample of a comparative example was produced.

Subsequently, the ESR of the monolithic ceramic capacitor of each sample was measured. The results thereof are shown in Table 9.

[Table 9]

| | | Dimension in width direction of internal electrode lead portion [$\mu$m] | ESR [m$\Omega$] |
|---|---|---|---|
| Example | | 1500 | 134 |
| | | 1000 | 301 |
| | | 500 | 815 |
| Comparative example | | 1500 | 6 |
| | | 1000 | 6 |
| | | 500 | 7 |

The values shown in Table 9 are average values of ten samples.

As is clear from "Example" in Table 9, in the case where the electrically conductive layer was allowed to have relatively high resistance by using the compound oxide, e.g., the In-Sn compound oxide, in the electrically conductive layer serving as the external electrode, the ESR was able to be significantly changed to increase as the dimension in the width direction of the internal electrode lead portion was reduced, that is, the connection area between the internal electrode and the electrically conductive layer was reduced.

On the other hand, in "Comparative example", since a Cu thick film was used in the electrically conductive layer serving as the external electrode, the resistance value of the electrically conductive layer was inherently relatively low. Consequently, the ESR was not significantly changed even when the dimension in the width direction of the internal electrode lead portion was changed.

**Claims**

1. A monolithic ceramic capacitor (1) comprising a capacitor main body (2) having a layered structure, in which ceramic layers (3) and internal electrodes (4,5) are layered alternately, and external electrodes (6,7) disposed on an outer surface of the capacitor main body in such a way as to electrically connect to the internal electrodes, wherein
the internal electrodes contain Ni or a Ni alloy, and
the external electrodes include a first electrically conductive layer (8) containing a compound oxide, which provides an intermetallic compound by reacting with the Ni or the Ni alloy, and a glass component.

2. The monolithic ceramic capacitor according to Claim 1, wherein the compound oxide includes an In-Sn compound oxide.

3. The monolithic ceramic capacitor according to Claim 1, wherein the external electrodes further comprise a metal plating layer (9) disposed on the outer surface side of the first electrically conductive layer.

4. The monolithic ceramic capacitor according to Claim 3, wherein the external electrodes further comprise a second electrically conductive layer (12) which is disposed between the first electrically conductive layer and the metal plating layer and which contains Cu or a Cu alloy.

5. The monolithic ceramic capacitor according to Claim 3, wherein the external electrodes further comprise a second electrically conductive layer (12) which is disposed between the first electrically conductive layer and the metal plating layer and which includes an electrically conductive resin primarily containing an electrically conductive metal component and a thermosetting resin.

6. The monolithic ceramic capacitor according to Claim 3, wherein the metal plating layer comprises a Ni plating layer serving as a substrate and a Sn plating layer or a solder plating layer disposed on the Ni plating layer.

7. The monolithic ceramic capacitor according to Claim 1, wherein the first electrically conductive layer further comprises an electrically conductive metal component or an insulating oxide for adjusting a resistance value of the external electrode.

8. The monolithic ceramic capacitor according to Claim 1, wherein the internal electrodes comprise lead portions electrically connected to the external electrodes, and in at least one of the internal electrodes, the length of a side, which is in contact with the first electrically conductive layer, of the lead portion is smaller than the length of the side, which is opposed to the lead portion, of the internal electrode.

9. A method for adjusting an equivalent series resistance of a monolithic ceramic capacitor (1) comprising a capacitor main body (2) having a layered structure, in which ceramic layers (3) and internal electrodes (4,5) are layered alternately, and external electrodes (6,7) disposed on an outer surface of the capacitor main body (2) in such a way as to electrically connect to the internal electrodes, wherein the internal electrodes contain Ni or a Ni alloy, and the external electrodes include a first electrically conductive layer (8) containing a compound oxide, which provides an intermetallic compound by reacting with the Ni or the Ni alloy, and a glass component, the method comprising the step of:

adjusting the resistance value of the external electrode by changing at least one of the amount of addition of the glass component contained in the electrically conductive layer and the glass softening point.

10. The method for adjusting an equivalent series resistance of a monolithic ceramic capacitor according to Claim 9, wherein the compound oxide includes an In-Sn compound oxide.

11. A method for adjusting an equivalent series resistance of a monolithic ceramic capacitor (1) comprising a capacitor main body (2) having a layered structure, in which ceramic layers (3) and internal electrodes (4,5) are layered alternately, and external electrodes (6,7) disposed on an outer surface of the capacitor main body in such a way as to electrically connect to the internal electrodes, wherein the internal electrodes contain Ni or a Ni alloy, and the external electrodes include a first electrically conductive layer (8) containing a compound oxide, which provides an intermetallic compound by reacting with the Ni or the Ni alloy, a glass component, and an electrically conductive metal component or an insulating oxide, the method comprising the step of:

    adjusting the resistance value of the external electrode by changing at least one of the amount of addition of the glass component contained in the electrically conductive layer, the glass softening point, and the amount of addition of the electrically conductive metal component or the insulating oxide.

12. The method for adjusting an equivalent series resistance of a monolithic ceramic capacitor according to Claim 11, wherein the compound oxide includes an In-Sn compound oxide.

13. A method for adjusting an equivalent series resistance of a monolithic ceramic capacitor (1) comprising a capacitor main body (2) having a layered structure, in which ceramic layers (3) and internal electrodes (4,5) are layered alternately, and external electrodes (6,7) disposed on an outer surface of the capacitor main body in such a way as to electrically connect to the internal electrodes, wherein the internal electrodes contain Ni or a Ni alloy, and the external electrodes include a first electrically conductive layer (8) containing a compound oxide, which provides an intermetallic compound by reacting with the Ni or the Ni alloy, and a glass component and a second electrically conductive layer (12) which is disposed on the outer surface side of the first electrically conductive layer and which includes an electrically conductive resin primarily containing an electrically conductive metal component and a thermosetting resin, the method comprising the step of:

    adjusting the resistance value of the external electrode by changing at least one of the amount of addition of the glass component contained in the first electrically conductive layer, the glass softening point, and the amount of addition of the electrically conductive metal component contained in the second electrically conductive layer.

14. The method for adjusting an equivalent series resistance of a monolithic ceramic capacitor according to Claim 13, wherein the compound oxide includes an In-Sn compound oxide.

15. A method for adjusting an equivalent series resistance of a monolithic ceramic capacitor (1) comprising a capacitor main body (2) having a layered structure, in which ceramic layers (3) and internal electrodes (4,5) are layered alternately, and external electrodes (6,7) disposed on an outer surface of the capacitor main body in such a way as to electrically connect to the internal s electrodes, wherein the internal electrodes contain Ni or a Ni alloy, and the external electrodes include a first electrically conductive layer (8) containing a compound oxide, which provides an intermetallic compound by reacting with the Ni or the Ni alloy, a glass component, and an electrically conductive metal component or an insulating oxide and a second electrically conductive layer (12) which is disposed on the outer surface side of the first electrically conductive layer and which includes an electrically conductive resin primarily containing an electrically conductive metal component and a thermosetting resin, the method comprising the step of:

    adjusting the resistance value of the external electrode by changing at least one of the amount of addition of the glass component contained in the first electrically conductive layer, the glass softening point, the amount of the electrically conductive metal component or an insulating oxide in the first electrically conductive layer, and the amount of addition of the electrically conductive metal component contained in the second electrically conductive layer.

16. The method for adjusting an equivalent series resistance of a monolithic ceramic capacitor according to Claim 15, wherein the compound oxide includes an In-Sn compound oxide.

17. The method for adjusting an equivalent series resistance of a monolithic ceramic capacitor according to any one of Claims 9 to 16, wherein the internal electrodes comprise lead portions electrically connected to the external electrodes, the method further comprising the step of adjusting the equivalent series resistance by changing the length of a side, which is in contact with the first electrically conductive layer, of the lead portion in at least one of the internal electrodes.

**Patentansprüche**

1. Ein monolithischer Keramikkondensator (1), der einen Kondensatorhauptkörper (2) mit einer geschichteten Struktur, bei der Keramikschichten (3) und interne Elektroden (4, 5) abwechselnd geschichtet sind, und externe Elektroden (6, 7) aufweist, die auf einer Außenoberfläche des Kondensatorhauptkörpers auf solche Weise angeordnet sind, um elektrisch mit den internen Elektroden verbunden zu sein, wobei

    die internen Elektroden Ni oder eine Ni-Legierung enthalten, und

    die externen Elektroden eine erste, elektrisch leitfähige Schicht (8) umfassen, die ein Verbundoxid, das einen intermetallischen Verbund durch Reagieren mit dem Ni oder der Ni-Legierung liefert, und eine Glaskomponente aufweist.

2. Der monolithische Keramikkondensator gemäß Anspruch 1, bei dem das Verbundoxid ein In-Sn-Verbundoxid umfasst.

3. Der monolithische Keramikkondensator gemäß Anspruch 1, bei dem die externen Elektroden ferner eine Metallplattierungsschicht (9) aufweisen, die auf der Außenoberflächenseite der ersten, elektrisch leitfähigen Schicht angeordnet ist.

4. Der monolithische Keramikkondensator gemäß Anspruch 3, bei dem die externen Elektroden ferner eine zweite, elektrisch leitfähige Schicht (12) aufweisen, die zwischen der ersten, elektrisch leitfähigen Schicht und der Metallplattierungsschicht angeordnet ist und die Cu oder eine Cu-Legierung enthält.

5. Der monolithische Keramikkondensator gemäß Anspruch 3, bei dem die externen Elektroden ferner eine zweite, elektrisch leitfähige Schicht (12) aufweisen, die zwischen der ersten, elektrisch leitfähigen Schicht und der Metallplattierungsschicht angeordnet ist und die ein elektrisch leitfähiges Harz umfasst, das primär eine elektrisch leitfähige Metallkomponente und ein duroplastisches Harz enthält.

6. Der monolithische Keramikkondensator gemäß Anspruch 3, bei dem die Metallplattierungsschicht eine Ni-Plattierungsschicht aufweist, die als ein Substrat dient, und eine Sn-Plattierungsschicht oder eine Lötmittelplattierungsschicht, die auf der Ni-Plattierungsschicht angeordnet ist.

7. Der monolithische Keramikkondensator gemäß Anspruch 1, bei dem die erste, elektrisch leitfähige Schicht ferner eine elektrisch leitfähige Metallkomponente oder ein isolierendes Oxid zum Einstellen eines Widerstandswerts der externen Elektrode aufweist.

8. Der monolithische Keramikkondensator gemäß Anspruch 1, bei dem die internen Elektroden Anschlussleitungsabschnitte aufweisen, die elektrisch mit den externen Elektroden verbunden sind, und bei zumindest einer der internen Elektroden die Länge einer Seite, die in Kontakt mit der ersten elektrisch leitfähigen Schicht ist, des Anschlussleitungsabschnitts, kleiner ist als die Länge der Seite, die gegenüberliegend zu dem Anschlussleitungsabschnitt ist, der internen Elektrode.

9. Ein Verfahren zum Einstellen eines äquivalenten Reihenwiderstandswerts eines monolithischen Keramikkondensators (1), der einen Kondensatorhauptkörper (2) mit einer geschichteten Struktur, bei der Keramikschichten (3) und interne Elektroden (4, 5) abwechselnd geschichtet sind, und externe Elektroden (6, 7) aufweist, die auf einer Außenoberfläche des Kondensatorhauptkörpers (2) auf solche Weise angeordnet sind, um elektrisch mit den internen Elektroden verbunden zu sein, wobei die internen Elektroden Ni oder eine Ni-Legierung enthalten, und die externen Elektroden eine erste, elektrisch leitfähige Schicht (8) umfassen, die ein Verbundoxid, das einen intermetallischen Verbund liefert durch Reagieren mit Ni oder der Ni-Legierung, und eine Glaskomponente enthält, wobei das Verfahren folgenden Schritt aufweist:

    Einstellen des Widerstandswerts der externen Elektrode durch Ändern von zumindest entweder dem Betrag der Addition der Glaskomponente, die in der elektrisch leitfähigen Schicht enthalten ist, oder des Glaserweichungspunkts.

10. Das Verfahren zum Einstellen eines äquivalenten Reihenwiderstandswerts eines monolithischen Keramikkondensators gemäß Anspruch 9, bei dem das Verbundoxid ein In-Sn-Verbundoxid umfasst.

11. Ein Verfahren zum Einstellen eines äquivalenten Reihenwiderstandswerts eines monolithischen Keramikkondensators (1), der einen Kondensatorhauptkörper (2) mit einer geschichteten Struktur, bei der die Keramikschichten (3) und die internen Elektroden (4, 5) abwechselnd geschichtet sind, und externe Elektroden (6, 7) aufweist, die auf einer Außenoberfläche des Kondensatorhauptkörpers auf solche Weise angeordnet sind, um eine elektrische Verbindung mit den internen Elektroden herzustellen, wobei die internen Elektroden Ni oder eine Ni-Legierung enthalten, und die externen Elektroden eine erste, elektrisch leitfähige Schicht (8) umfassen, die ein Verbundoxid, das einen intermetallischen Verbund liefert durch Reagieren mit dem Ni oder der Ni-Legierung, eine Glaskomponente und eine elektrisch leitfähige Metallkomponente oder ein isolierendes Oxid enthält, wobei das Verfahren folgende Schritte aufweist:

Einstellen des Widerstandswerts der externen Elektrode durch Ändern von zumindest entweder dem Betrag der Addition der Glaskomponente, die in der elektrisch leitfähigen Schicht enthalten ist, dem Glaserweichungspunkt oder dem Betrag der Addition der elektrisch leitfähigen Metallkomponente oder des isolierenden Oxids.

12. Das Verfahren zum Einstellen eines äquivalenten Reihenwiderstandswerts eines monolithischen Keramikkondensators gemäß Anspruch 11, bei dem das Verbundoxid ein In-Sn-Verbundoxid umfasst.

13. Ein Verfahren zum Einstellen eines äquivalenten Reihenwiderstandswerts eines monolithischen Keramikkondensators (1), der einen Kondensatorhauptkörper (2) mit einer geschichteten Struktur, bei der Keramikschichten (3) und interne Elektroden (4, 5) abwechselnd geschichtet sind, und externe Elektroden (6, 7) aufweist, die auf einer Außenoberfläche des Kondensatorhauptkörpers auf solche Weise angeordnet sind, um eine elektrische Verbindung mit den internen Elektroden herzustellen, wobei die internen Elektroden Ni oder eine Ni-Legierung enthalten, und die externen Elektroden eine erste, elektrisch leitfähige Schicht (8), die ein Verbundoxid, das einen intermetallischen Verbund liefert durch Reagieren mit Ni oder der Ni-Legierung, und eine Glaskomponente enthält, und eine zweite, elektrisch leitfähige Schicht (12) umfassen, die auf der Außenoberflächenseite der ersten, elektrisch leitfähigen Schicht angeordnet ist und die ein elektrisch leitfähiges Harz umfasst, das primär eine elektrisch leitfähige Metallkomponente und ein duroplastisches Harz enthält, wobei das Verfahren folgenden Schritt aufweist:

Einstellen des Widerstandswerts der externen Elektrode durch Ändern von zumindest entweder dem Betrag der Addition der Glaskomponente, die in der ersten elektrisch leitfähigen Schicht enthalten ist, des Glaserweichungspunkts oder des Betrags der Addition der elektrisch leitfähigen Metallkomponente, die in der zweiten elektrisch leitfähigen Schicht enthalten ist.

14. Das Verfahren zum Einstellen eines äquivalenten Reihenwiderstandswerts eines monolithischen Keramikkondensators gemäß Anspruch 13, bei dem das Verbundoxid ein In-Sn-Verbundoxid umfasst.

15. Ein Verfahren zum Einstellen eines äquivalenten Reihenwiderstandswerts eines monolithischen Keramikkondensators (1), der einen Kondensatorhauptkörper (2) mit einer geschichteten Struktur, bei der Keramikschichten (3) und interne Elektroden (4, 5) abwechselnd geschichtet sind, und externe Elektroden (6, 7) aufweist, die auf einer Außenoberfläche des Kondensatorhauptkörpers auf solche Weise angeordnet sind, um eine elektrische Verbindung mit den internen Elektroden herzustellen, wobei die internen Elektroden Ni oder eine Ni-Legierung enthalten, und die externen Elektroden eine erste, elektrisch leitfähige Schicht (8), die ein Verbundoxid, das einen intermetallischen Verbund liefert durch Reagieren mit Ni oder der Ni-Legierung, eine Glaskomponente und eine elektrisch leitfähige Metallkomponente oder ein isolierendes Oxid enthält, und eine zweite, elektrisch leitfähige Schicht (12) umfassen, die auf der Außenoberflächenseite der ersten, elektrisch leitfähigen Schicht angeordnet ist und die ein elektrisch leitfähiges Harz umfasst, das primär eine elektrisch leitfähige Metallkomponente und ein duroplastisches Harz enthält, wobei das Verfahren folgenden Schritt aufweist:

Einstellen des Widerstandswerts der externen Elektrode durch Ändern von zumindest entweder dem Betrag der Addition der Glaskomponente, die in der ersten, elektrisch leitfähigen Schicht enthalten ist, des Glaserweichungspunkts, des Betrags der elektrisch leitfähigen Metallkomponente oder eines isolierenden Oxids in der ersten, elektrisch leitfähigen Schicht, oder des Betrags der Addition der elektrisch leitfähigen Metallkomponente, die in der zweiten, elektrisch leitfähigen Schicht enthalten ist.

16. Das Verfahren zum Einstellen eines äquivalenten Reihenwiderstandswerts eines monolithischen Keramikkondensators gemäß Anspruch 15, bei dem das Verbundoxid ein In-Sn-Verbundoxid umfasst.

**17.** Das Verfahren zum Einstellen eines äquivalenten Reihenwiderstandswerts eines monolithischen Keramikkondensators gemäß einem der Ansprüche 9 bis 16, bei dem die internen Elektroden Anschlussleitungsabschnitte aufweisen, die elektrisch mit den externen Elektroden verbunden sind, wobei das Verfahren ferner den Schritt des Einstellens des äquivalenten Reihenwiderstandswerts durch Ändern der Länge einer Seite, die in Kontakt mit der ersten elektrisch leitfähigen Schicht ist, des Anschlussleitungsabschnitts bei zumindest einer der internen Elektroden aufweist.

**Revendications**

**1.** Condensateur céramique monolithique (1) comprenant un corps principal de condensateur (2) comportant une structure en couches, dans laquelle des couches céramiques (3) et des électrodes internes (4,5) sont disposées en couches en alternance, et des électrodes externes (6,7) étant disposées sur une surface extérieure du corps principal de condensateur de manière à être reliées électriquement aux électrodes internes, dans lequel

les électrodes internes contiennent du Ni ou un alliage de Ni, et
les électrodes externes comprennent une première couche électriquement conductrice (8) contenant un oxyde de composé, qui produit un composé intermétallique en réagissant avec le Ni ou l'alliage de Ni, et un composant de verre.

**2.** Condensateur céramique monolithique selon la revendication 1, dans lequel l'oxyde de composé comprend un oxyde de composé In-Sn.

**3.** Condensateur céramique monolithique selon la revendication 1, dans lequel les électrodes externes comprennent en outre une couche de placage métallique (9) disposée sur le côté de surface extérieure de la première couche électriquement conductrice.

**4.** Condensateur céramique monolithique selon la revendication 3, dans lequel les électrodes externes comprennent en outre une seconde couche électriquement conductrice (12) qui est disposée entre la première couche électriquement conductrice et la couche de placage métallique et qui contient du Cu ou un alliage de Cu.

**5.** Condensateur céramique monolithique selon la revendication 3, dans lequel les électrodes externes comprennent en outre une seconde couche électriquement conductrice (12) qui est disposée entre la première couche électriquement conductrice et la couche de placage métallique et qui comprend une résine électriquement conductrice contenant essentiellement un composant métallique électriquement conducteur et une résine thermodurcissable.

**6.** Condensateur céramique monolithique selon la revendication 3, dans lequel la couche de placage métallique comprend une couche de placage Ni servant de substrat et une couche de placage Sn ou une couche de placage par brasage disposée sur la couche de placage Ni.

**7.** Condensateur céramique monolithique selon la revendication 1, dans lequel la première couche électriquement conductrice comprend en outre un composant métallique électriquement conducteur ou un oxyde d'isolation pour ajuster une valeur de résistance de l'électrode externe.

**8.** Condensateur céramique monolithique selon la revendication 1, dans lequel les électrodes internes comprennent des parties fil électriquement reliées aux électrodes externes, et dans au moins une des électrodes internes, la longueur d'un côté, qui est en contact avec la première couche électriquement conductrice, de la partie fil est inférieure à la longueur du côté, qui est opposé à la partie fil, de l'électrode interne.

**9.** Procédé d'ajustement d'une résistance série équivalente d'un condensateur céramique monolithique (1) comprenant un corps principal de condensateur (2) comportant une structure en couches, dans laquelle des couches céramiques (3) et des électrodes internes (4,5) sont disposées en couches en alternance, et des électrodes externes (6,7) étant disposées sur une surface extérieure du corps principal de condensateur (2) de manière à être reliées électriquement aux électrodes internes, dans lequel les électrodes internes contiennent du Ni ou un alliage de Ni, et les électrodes externes comprennent une première couche électriquement conductrice (8) contenant un oxyde de composé, qui produit un composé intermétallique en réagissant avec le Ni ou l'alliage de Ni, et un composant de verre, le procédé comprenant l'étape consistant à:

ajuster la valeur de résistance de l'électrode externe en changeant la quantité d'ajout du composant de verre contenu dans la couche électriquement conductrice et/ou le point de ramollissement de verre.

**10.** Procédé d'ajustement d'une résistance série équivalente d'un condensateur céramique monolithique selon la revendication 9, dans lequel l'oxyde de composé comprend un oxyde de composé In-Sn.

**11.** Procédé d'ajustement d'une résistance série équivalente d'un condensateur céramique monolithique (1) comprenant un corps principal de condensateur (2) comportant une structure en couches, dans laquelle des couches céramiques (3) et des électrodes internes (4,5) sont disposées en couches en alternance, et des électrodes externes (6,7) étant disposées sur une surface extérieure du corps principal de condensateur de manière à être reliées électriquement aux électrodes internes, dans lequel les électrodes internes contiennent du Ni ou un alliage de Ni, et les électrodes externes comprennent une première couche électriquement conductrice (8) contenant un oxyde de composé, qui produit un composé intermétallique en réagissant avec le Ni ou l'alliage de Ni, un composant de verre, et un composant métallique électriquement conducteur ou un oxyde d'isolation, le procédé comprenant l'étape consistant à :

ajuster la valeur de résistance de l'électrode externe en changeant au moins une caractéristique parmi la quantité d'ajout du composant de verre contenu dans la couche électriquement conductrice, le point de ramollissement de verre, et la quantité d'ajout du composant métallique électriquement conducteur ou de l'oxyde d'isolation.

**12.** Procédé d'ajustement d'une résistance série équivalente d'un condensateur céramique monolithique selon la revendication 11, dans lequel l'oxyde de composé comprend un oxyde de composé In-Sn.

**13.** Procédé d'ajustement d'une résistance série équivalente d'un condensateur céramique monolithique (1) comprenant un corps principal de condensateur (2) comportant une structure en couches, dans laquelle des couches céramiques (3) et des électrodes internes (4,5) sont disposées en couches en alternance, et des électrodes externes (6,7) étant disposées sur une surface extérieure du corps principal de condensateur de manière à être reliées électriquement aux électrodes internes, dans lequel les électrodes internes contiennent du Ni ou un alliage de Ni, et les électrodes externes comprennent une première couche électriquement conductrice (8) contenant un oxyde de composé, qui produit un composé intermétallique en réagissant avec le Ni ou l'alliage de Ni, et un composant de verre et une seconde couche électriquement conductrice (12) qui est disposée sur le côté de surface extérieure de la première couche électriquement conductrice et qui comprend une résine électriquement conductrice contenant essentiellement un composant métallique électriquement conducteur et une résine thermodurcissable, le procédé comprenant l'étape consistant à :

ajuster la valeur de résistance de l'électrode externe en changeant au moins une caractéristique parmi la quantité d'ajout du composant de verre contenu dans la première couche électriquement conductrice, le point de ramollissement de verre, et la quantité d'ajout du composant métallique électriquement conducteur ou de l'oxyde d'isolation.

**14.** Procédé d'ajustement d'une résistance série équivalente d'un condensateur céramique monolithique selon la revendication 13, dans lequel l'oxyde de composé comprend un oxyde de composé In-Sn.

**15.** Procédé d'ajustement d'une résistance série équivalente d'un condensateur céramique monolithique (1) comprenant un corps principal de condensateur (2) comportant une structure en couches, dans laquelle des couches céramiques (3) et des électrodes internes (4,5) sont disposées en couches en alternance, et des électrodes externes (6,7) étant disposées sur une surface extérieure du corps principal de condensateur de manière à être reliées électriquement aux électrodes internes, dans lequel les électrodes internes contiennent du Ni ou un alliage de Ni, et les électrodes externes comprennent une première couche électriquement conductrice (8) contenant un oxyde de composé, qui produit un composé intermétallique en réagissant avec le Ni ou l'alliage de Ni, un composant de verre et un composant métallique électriquement conducteur (12) qui est disposé sur le côté de surface extérieure de la première couche électriquement conductrice et qui comprend une résine électriquement conductrice contenant essentiellement un composant métallique électriquement conducteur et une résine thermodurcissable, le procédé comprenant l'étape consistant à :

ajuster la valeur de résistance de l'électrode externe en changeant au moins une caractéristique parmi la quantité d'ajout du composant de verre contenu dans la première couche électriquement conductrice, le point de ramollissement de verre, la quantité d'ajout du composant métallique électriquement conducteur ou de l'oxyde d'isolation dans la première couche électriquement conductrice, et la quantité d'ajout du composant métallique électriquement conducteur contenu dans la seconde couche électriquement conductrice.

**16.** Procédé d'ajustement d'une résistance série équivalente d'un condensateur céramique monolithique selon la revendication 15, dans lequel l'oxyde de composé comprend un oxyde de composé In-Sn.

**17.** Procédé d'ajustement d'une résistance série équivalente d'un condensateur céramique monolithique selon l'une quelconque des revendications 9 à 16, dans lequel les électrodes internes comprennent des parties fil électriquement reliées aux électrodes externes, le procédé comprenant en outre l'étape consistant à ajuster la résistance série équivalente en changeant la longueur d'un côté, qui est en contact avec la première couche électriquement conductrice, de la partie fil dans au moins une des électrodes internes.

FIG. 1

FIG. 2

FIG. 3

<u>21</u>

FIG. 4

<u>31</u>

FIG. 5

1/Ag EXPOSURE FACTOR

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4337616 A
- JP 11121276 A
- JP 2001223132 A
- JP 2004128328 A